# EUROPÄISCHE PATENTSCHRIFT

(11) **EP 2 637 910 B1**
(45) Veröffentlichungstag und Bekanntmachung des Hinweises auf die Patenterteilung: **17.12.2014**
(21) Anmeldenummer: 11771042.6
(22) Anmeldetag: 18.10.2011
(51) Int. Cl.: B62D 1/187

(54) **HÖHENVERSTELLBARE SICHERHEITS-LENKSÄULENANORDNUNG**
HEIGHT-ADJUSTABLE SAFETY STEERING COLUMN ASSEMBLY
AGENCEMENT DE COLONNE DE DIRECTION DE SÉCURITÉ RÉGLABLE EN HAUTEUR

(30) Priorität: 11.11.2010 DE 102010051039
(43) Veröffentlichungstag der Anmeldung: 18.09.2013
(73) Patentinhaber: Daimler AG, 70327 Stuttgart (DE)
(72) Erfinder: EHLERS, Christian, 21073 Hamburg (DE); KITTLER, Holger, 22765 Hamburg (DE); KRÜGER, Thomas, 21244 Buchholz i.d.N. (DE); SCHWIEGER, Marco, 21147 Hamburg (DE)
(74) Vertreter: JENSEN & SON
(86) Internationale Anmeldenummer: PCT/EP2011/005241
(87) Internationale Veröffentlichungsnummer: WO 2012/062401

(56) Entgegenhaltungen:
- EP-A1- 1 445 169
- EP-A1- 1 561 669
- DE-A1-102004 020 048
- DE-A1-102008 062 634

## Beschreibung

Die Erfindung betrifft eine höhenverstellbare Sicherheits-Lenksäulenanordnung.

Bei bekannten höhenverstellbaren Sicherheits-Lenksäulenanordnungen mit einer fahrzeugfesten Konsole kann das Mantelrohr schwenkbar an der Konsole gelagert sein. In dem Mantelrohr sind die kreuzgelenkige Lenkspindel und üblicherweise ein inneres Mantelrohr mit einem teleskopierbaren lenkradseitigen Abschnitt der Lenkspindel gelagert. Bei den höhenverstellbaren Sicherheitslenksäulen muss das Verstellsystem, das das schwenkbar an der Konsole gelagerte Mantelrohr umfasst, mittels einer Drehachse gelagert werden. Bei dem Zusammenbau der Lenksäule mit einer Konsole, die die Schwenkachse bildet und die mit einer Fahrzeugstruktur verbunden ist, können sich Positionierungstoleranzen ergeben, die auszugleichen sind, um die Verbindung steif und spielfrei und somit sicher zu gestalten.

Um eine exakte Positionierung der beiden Bauteile zueinander mit möglichst wenig Spiel zu erreichen, müssen die zu fügenden Bauteile Konsole und Mantelrohr im Fügebereich mit geringen Toleranzen gefertigt werden, was durch die Fertigung im Gussverfahren aufwändig ist und Nachbearbeitung der Bauteile erforderlich macht. Spiel ist bis dato kaum ausgleichbar.

Eine Positioniervorrichtung zur spielfreien Festlegung eines um ein Element schwenkbaren Achselements für eine Lenksäulenhalterung ist aus der DE 10 2009 052 375 A1 bekannt. Um das Achselement ist ein Element schwenkbar angeordnet, indem es mit einer Lagerbuchse verbunden ist, die von dem Achselement durchdrungen wird. Die Ausnehmung in dem Halterungsabschnitt ist ein Langloch, dessen Höhe und Breite größer sind als ein Durchmesser des Achselements, so dass das Achselement in einer Ebene senkrecht zu dem Achselement positioniert werden kann. Das Achselement kann eine Gewindeschraube sein, auf der ein spreizbares Klemmelement angeordnet ist, das mit einer Innenwandung des Langlochs in Eingriff tritt. Eine Festlegungsanordnung der Positioniervorrichtung wird durch das aufgespreizte Klemmelement spielfrei erreicht, indem es mit der Innenwandung des Langlochs verklemmt wird, nachdem die Schraube der für das Element vorgesehenen Schwenkachse in dem Langloch des Halterungsabschnitts zumindest positioniert wurde. Durch das verwendete Klemmelement wird ermöglicht, dass die zu tragenden Bauteile aus Schwenkelement und Halterungsabschnitt im Fügebereich mit Gusstoleranzen hergestellt werden können und eine Nachbearbeitung nicht mehr notwendig ist.

Auch in der DE 10 2004 020 048 A1 wird eine Sicherheitslenksäule für ein Kraftfahrzeug offenbart, die aus einer teleskopierbaren Lenkspindel mit einem lenkradnahen oberen Spindelteil und einem lenkradfernen unteren Spindelteil besteht, und die in einem Mantelrohr drehbar gelagert ist. Das Mantelrohr ist mehrteilig und teleskopierbar ausgestaltet. Die Rohrteile sind an einer fahrzeugfesten Konsole gelagert, wobei zu der Befestigung keine Ausführung gemacht wird.

Eine weitere Lenksäulenbefestigung für Kraftfahrzeuge, die über ein Deformationselement als Sicherheitselement verfügt, ist aus der DE 29 501 552.7 bekannt. Dieses ist zwischen einer Lenkkonsole und einem von einer Lenksäule durchsetzten Lenksäulenmantelrohr vorgesehen. Das Deformationselement kann beispielsweise mittels Nieten am Schenkel der Lenkkonsole befestigt sein. Die dort offenbarte Lenkvorrichtung ist weder höhenverstellbar noch teleskopierbar.

**Die** EP 1 445169 A1 **betrifft eine Lenksäule mit einer Höhen- und Längenverstellung und mit einer Gleitschwenkvorrichtung an einer fahrzeugfesten Lenkkonsole. Die Gleitschwenkvorrichtung beinhaltet ein Gehäuse zur Halterung des Lenksäulenrohres und eine in einer Gleitbuchse gehaltenen Niete, die von außen in das Gehäuse eingebracht und dort befestigt ist und dieses mit der Konsole über die Buchse schwenkbeweglich verbindet.**

**In gleicher Weise zeigt die** EP 1 561 669 A1 **eine höhen- und längenverstellbare Lenksäule, bei der das die Lenkspindel umgebende Mantelrohr an einer fahrzeugfesten Konsole mittels zweier Scharnierstifte schwenkbar angebracht ist.**

**In ähnlicher Weise ist der** DE 10 2008 062 634 A1 **eine Lenksäule zu entnehmen, die mitsamt der Lenksäulenkonsole schwenkbar an einer Querträgerkonsole angebunden ist. Die Schwenkbarkeit wird durch eine Nietbuchsenverbindung an einem Ende der Querträgerkonsole bereit gestellt, wobei durch die Verbindung** zwei quer zur Lenksäulenlängsrichtung beabstandete Lagerbacken der Querträgerkonsole an zwei Lagerbacken der Lenksäule befestigt sind.

Ausgehend von diesem Stand der Technik ergibt sich die Aufgabe, eine höhenverstellbare Sicherheits-Lenksäulenanordnung zu schaffen, bei der, um eine hohe Steifigkeit und Eigenfrequenz der Lenksäule zu erreichen, die Drehachse einerseits möglichst fest angebunden und andererseits zur komfortablen Verstellbarkeit aber dennoch leichtgängig montiert ist. Auch sollen Montagetoleranzen zwischen der fahrzeugfesten Konsole und dem Mantelrohr ausgeglichen werden können. Die Lösung hierfür soll einfach, kostengünstig und zuverlässig realisierbar sein.

Diese Aufgabe wird durch eine höhenverstellbare Sicherheits-Lenksäulenanordnung mit den Merkmalen des Anspruchs 1 gelöst.

Weiterbildungen der Vorrichtung sind in den Unteransprüchen ausgeführt.

Eine erste Ausführungsform der höhenverstellbaren Sicherheits-Lenksäulenanordnung weist eine fahrzeugfeste Konsole auf, in der schwenkbar ein äußeres Mantelrohr angeordnet ist, das eine Lenkspindel mit einem Kreuzgelenk und ferner ein inneres Mantelrohr umfasst, das einen teleskopierbaren lenkradseitigen Abschnitt der Lenkspindel umgibt. Die schwenkbare Verbindung des äußeren Mantelrohrs mit der fahrzeugfesten Konsole ist mittels zweier Nietverbindungen ausgeführt, die diametral am Umfang des Mantelrohrs vorliegen und vorteilhaft eine Drehachse bilden, die mit der Kreuzgelenkachse der Lenkspindel übereinstimmt. So wird verhindert, dass es zu einem kinematischen Versatz in der Lenkspindel kommt.

Für jede der durch zwei Nieten gebildeten Verbindungen weist die fahrzeugfeste Konsole eine Durchtrittsöffnung auf, die in eine entsprechende Durchtrittsöffnung des äußeren Mantelrohrs mündet. Der Nietkopf kommt jeweils mantelrohrseitig zur Anlage. Die durch die Nietverbindungen geschaffene Drehachse ist dabei vorteilhaft so ausgebildet, dass Montagetoleranzen, die zwischen der fahrzeugfesten Konsole und dem äußeren Mantelrohr vorliegen, ausgeglichen werden können.

Die Anordnung des Niets, der einen Nietsetzkopf und einen Nietschaft aufweist, ist dabei derart, dass der beim Schließen der Nietverbindung hergestellte Nietschließkopf mantelrohrseitig erzeugt oder geschlossen wird, was montagetechnisch günstig ist.

Um den Nietsetzkopf aufzunehmen, weist die Durchtrittsöffnung der fahrzeugfesten Konsole vorteilhaft wenigstens an ihrer von dem Mantelrohr abgewandten Seite eine Fase oder eine Ansenkung auf, die so ausgeformt ist, dass sie entsprechend mit der Form des Nietsetzkopfs korrespondiert. Die Durchtrittsöffnung des äußeren Mantelrohrs kann ferner an ihrer von der fahrzeugfesten Konsole abgewandten Seite auch eine Fase oder eine Ansenkung aufweisen, um den Nietschließkopf mindestens mit seinem Übergangsabschnitt vom Nietschaft in den Schließkopf aufzunehmen.

Bei den Nieten kann es sich um bekannte, industriell gefertigte Nieten wie Halbhohlnieten, Senknieten, Krempelnieten, Pressnieten, Taumelnieten oder andere geeignete einfache Nieten handeln.

Vorteilhaft ist eine Buchse in der Durchtrittsöffnung angeordnet, die durch die mantelrohrseitige Durchtrittsöffnung und die konsolenseitige Durchtrittsöffnung gemeinsam gebildet wird. Es ist vorteilhaft, wenn sich die Buchse zur Verminderung der Reibung der NietGuss-Verbindung wenigstens in den Abschnitt der Durchtrittsöffnung erstreckt, der in dem Mantelrohr gebildet ist; die Buchse kann sich jedoch auch in den angrenzenden Abschnitt der Durchtrittsöffnung der fahrzeugfesten Konsole erstrecken. Eine derartige Buchse kann vorteilhaft aus Kunststoff hergestellt sein; sie umgibt wenigstens den Schaft des Niets.

Die Buchse kann zur verbesserten Anordnung schließkopfseitg mit einem flanschförmigen Rand ausgebildet sein. Dieser kann ferner zumindest teilweise in der Ansenkung oder der Fase aufgenommen werden.

Ferner weist die Durchtrittsöffnung der fahrzeugfesten Konsole in einer weiteren Ausführungsform an ihrer zu dem äußeren Mantelrohr weisenden Seite auch eine Fase oder eine Ansenkung auf; die mit einem sich in die Durchtrittsöffnung der fahrzeugfesten Konsole erstreckenden Abschnitt der Buchse **übereinstimmt,** die eine entsprechend der gebildeten Durchtrittsöffnungsform komplementäre Form hat.

Die Buchse kann einen konischen Außenumfang aufweisen, dann bilden die beiden aneinander grenzenden Durchtrittsöffnungen in der Zusammenschau ebenfalls einen komplementären Konus.

In einer speziellen Ausführungsform des Niets kann dieser einen zylindrischen Nietschaft mit einer außen umfänglichen Abstufung aufweisen. Die Anordnung des Niets ist dann logisch derart, dass ein Abschnitt des Nietschafts mit einem größeren Durchmesser in der Durchtrittsöffnung der Konsole anliegt, die ebenfalls einen größeren Durchmesser hat, während ein Abschnitt mit einem kleineren Durchmesser in der Durchtrittsöffnung des Mantelrohrs anliegt, die entsprechend einen kleineren Durchmesser hat, da der Niet mit dem nicht geschlossenen Schließkopf vorweg in die Durchtrittsöffnung der Konsole eingeschoben wird. Diese Nietverbindung mit axialem Absatz dient vorteilhaft als Anschlag für einen definierten Spalt, der zwischen Mantelrohr und Konsole gehalten werden soll und dient folglich dem Toleranzausgleich.

Die vorliegende Nietverbindung ist daher insbesondere vorteilhaft, um aus Guss hergestellte Mantelrohr- und Konsolenbauteile zu verbinden, die vielfach das Erfordernis mit sich bringen, die genannten fertigungstechnisch bedingten Toleranzen auszugleichen.

So ermöglicht die erfindungsgemäße höhenverstellbare Sicherheitslenksäulenanordnung den Erhalt einer Lenksäule mit besonders hoher Steifigkeit und Eigenfrequenz, das in einer verbesserten Sicherheit des Lenksystems resultiert. Diese Vorteile werden durch den formschlüssigen axialen und radialen Spielausgleich der Nietverbindung erreicht. Ferner erlaubt die Nietverbindung eine einfache Montage und sie ist kostengünstig in der Fertigung.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine perspektivische Seitenansicht auf einen Ausschnitt einer erfindungsgemäßen höhenverstellbaren Sicherheits-Lenksäulenanordnung,
- Fig. 2: eine Seitenschnittansicht der erfindungsgemäßen Nietverbindung,
- Fig. 3: eine Seitenschnittansicht einer noch weiteren Nietverbindung,
- Fig. 4: eine Seitenschnittansicht einer noch weiteren Nietverbindung,
- Fig. 5: eine Seitenschnittansicht einer noch weiteren Nietverbindung,
- Fig. 6: eine Seitenschnittansicht einer noch weiteren Nietverbindung.

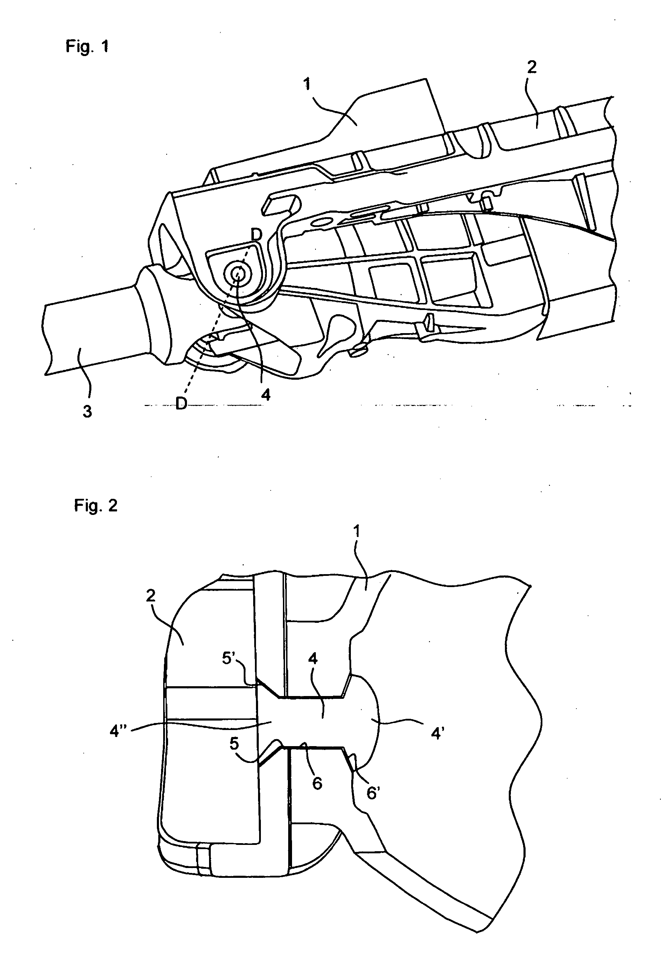

Die erfindungsgemäße Vorrichtung bezieht sich auf eine höhenverstellbare Sicherheits-Lenksäulenanordnung, wie sie ausschnittsweise in Fig. 1 gezeigt ist. Dort ist eine fahrzeugfeste Konsole 2 zu sehen, in der schwenkbar ein äußeres Mantelrohr 1 gelagert ist. Dieses umfasst eine Lenkspindel 3 mit einem Kreuzgelenk, ferner ein inneres Mantelrohr, das einen teleskopierbaren lenkradseitigen Abschnitt der Lenkspindel umgibt.

Die schwenkbare Verbindung des äußeren Mantelrohrs 1 mit der fahrzeugfesten Konsole 2 ist mittels zweier Nietverbindungen ausgeführt; zu sehen ist in Fig. 1 lediglich eine der Nietverbindungen mit dem Niet 4. Die beiden Nietverbindungen sind diametral an einem Umfang des Mantelrohrs 1 vorgesehen und bilden eine mit der Kreuzgelenkachse der Lenkspindel 3 übereinstimmende Drehachse D-D.

Dies wird erreicht, indem für jede durch die beiden Nieten 4 gebildete Verbindung die fahrzeugfeste Konsole 2 eine Durchtrittsöffnung 5 aufweist, zu sehen in Fig. 2 bis 6, die an eine Durchtrittsöffnung 6 des Mantelrohrs 1 angrenzt. Wie in allen Fig. 2 bis 6 zu sehen ist, wird der Setzkopf 4", konsolenseitig positioniert, während der Schließkopf 4' mantelrohrseitig ausgebildet wird.

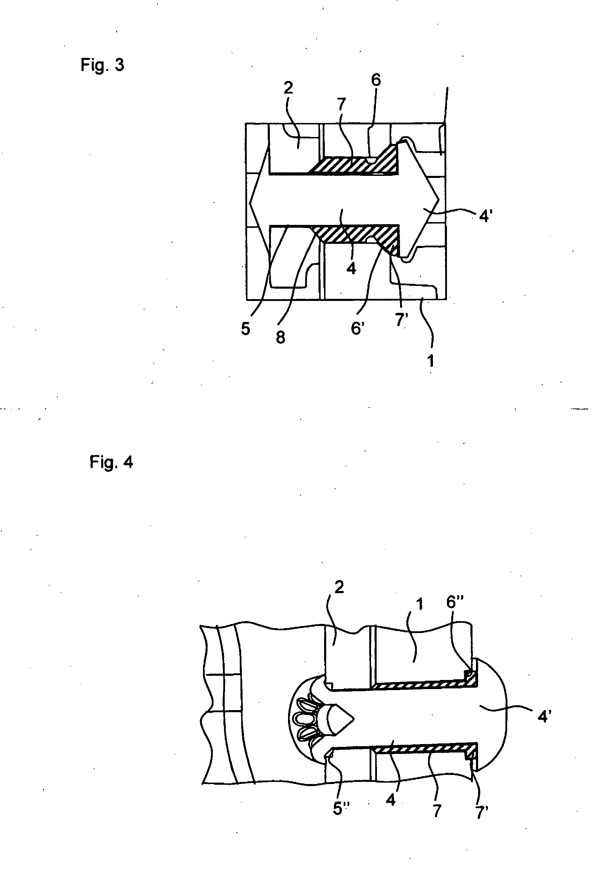

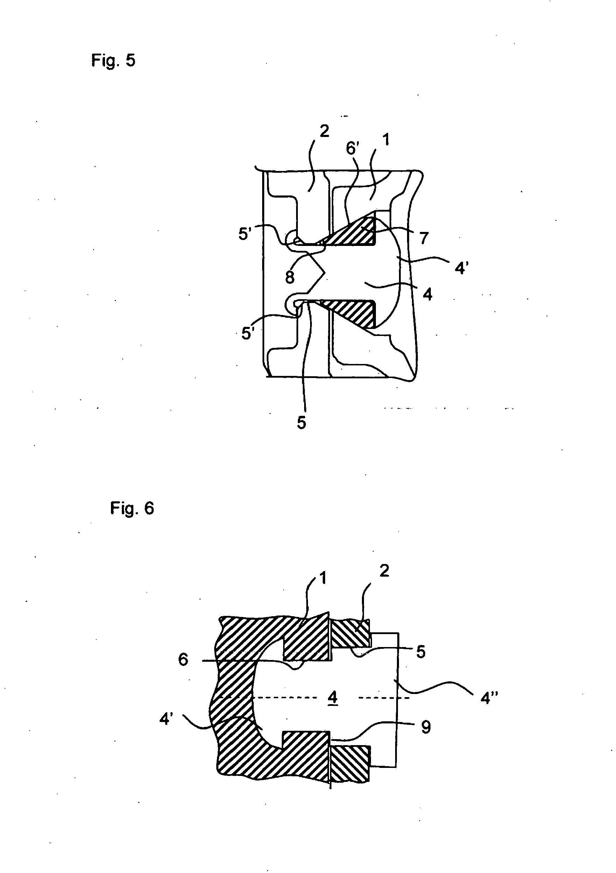

Um den Setzkopf 4" aufzunehmen, kann die Durchtrittsöffnung 5 eine Fase 5' aufweisen, wie in Fig. 2 zu sehen ist. Hat der Setzkopf 4" eine spitz zulaufende Form, siehe Fig. 3, so muss dieser nicht in der Durchtrittsöffnung 5 der Konsole 2 aufgenommen sein, sondern kann an diese anschlagen. Der Schließkopf 4' kann, abhängig vom gewählten Schließwerkzeug, ebenfalls spitz zulaufen, siehe etwa Fig, 3, oder er kann kuppelförmig ausgebildet sein, siehe Fig. 2, 4 und 5. Auch ein flacher Schließkopf 4' kann erzeugt werden, siehe Fig. 6.

Vorteilhaft kann die Durchtrittsöffnung 6 des äußeren Mantelrohrs 1 an ihrer von der fahrzeugfesten Konsole 2 abgewandten Seite eine Fase 6' aufweisen, wie etwa in Fig. 2 dargestellt, sie kann aber auch angesenkt sein. Eine derartige Ansenkung 2' ist etwa in Fig. 4 gezeigt. Durch die Fase 6',5', die quasi einen Konus in der Lochlaibung der Konsole 2 als auch in dem Mantelrohr 2 bildet, wird bei der Umformung des Niets 4 ein axialer und radialer Spielausgleich erreicht. Dadurch wird der Lenksäulenanordnung eine höhere Steifigkeit und Eigenfrequenz verliehen.

Vorteilhaft kann die Durchtrittsöffnung 5,6 wenigstens mantelrohrseitig mit einer Buchse 7 ausgestattet sein, um Reibung zu vermindern. Hierzu können Kunststoff-Buchsen, die die Gleitreibung verbessern, was gerade bei fester Anbindung oder zu großem Verschleiß der Niet-Gussteil-Verbindung vorteilhaft ist, verwendet werden.

Buchsen 7 unterschiedlicher Formen sind in Fig. 3 bis 6 gezeigt: Die in Fig. 5 gezeigte Buchse 7 erfordert, dass die Durchtrittsöffnung 5 der Konsole 2 mantelrohrseitig ebenfalls angefast ist. Die so bereitgestellte Fase 8 ergänzt sich mit der konischen Form der Durchtrittsöffnung 6' zu einer insgesamt konischen Durchtrittsöffnung, in der eine ebenso geformte Buchse 7 angeordnet werden kann.

Die in der teilperspektivischen Ansicht der in Fig. 4 gezeigten Buchse 7 hingegen ist zylindrisch, weist jedoch schließkopfseitig einen Flansch 7' auf, der der verbesserten Positionierung dient und der in der Ansenkung 6" des Mantelrohrs aufgenommen ist. Darüber wird der Schließkopf 4' des Niets 4 ausgebildet und sorgt für sicheren Sitz der Guss-Kunststoff-Verbindung.

Auch in Fig. 3 zeigt die Buchse 7 einen mantelrohrseitigen Flansch 7', der allerdings angeschrägt ist und dessen Form daher mit der eingangs der Durchtrittsöffnung 6 des Mantelrohrs vorliegenden Fase 6' **übereinstimmt**.

Wenn eine definierte Lage von Mantelrohr 1 und Konsole 2 festzulegen ist, können die Niete 4 durch entsprechende Nietformen, die einen Absatz aufweisen, bei der gewünschten Positionierung hilfreich sein. Eine dazu geeignete Nietform ist in Fig. 6 gezeigt. Dort hat der Niet 4 einen zylindrischen Nietschaft, der jedoch an seinem Umfang eine Abstufung 9 aufweist. Bei der Anordnung eines derartigen Niets 4 kommt der Abschnitt des Nietschafts mit kleinerem Durchmesser in der Durchtrittsöffnung 6 des Mantelrohrs 1 zu liegen, während der Abschnitt mit dem größeren Durchmesser in der Durchtrittsöffnung 5 der Konsole 2 zu liegen kommt, da der Niet 4 in diese zuerst eingeführt wird.

So wird durch die erfindungsgemäße Vorrichtung eine höhenverstellbare Sicherheits-Lenksäulenanordnung mit hoher Eigenfrequenz und Steifigkeit durch formschlüssigen axialen und radialen Spielausgleich, bereitgestellt durch die erfindungsgemäße Nietverbindung, geschaffen. Die Nietverbindung lässt sich einfach und kostengünstig herstellen und Druckgussteile, die fertigungsbedingt Montagetoleranzen aufweisen, können auf geeignete Weise miteinander verbunden werden.

## Patentansprüche

1. Höhenverstellbare Sicherheits-Lenksäulenanordnung, die eine fahrzeugfeste Konsole (2) aufweist, in der schwenkbar ein äußeres Mantelrohr (1) gelagert ist, das eine Lenkspindel (3) mit einem Kreuzgelenk und ferner ein inneres Mantelrohr umfasst, das einen teleskopierbaren lenkradseitigen Abschnitt der Lenkspindel (3) umgibt,
**dadurch gekennzeichnet, dass**
die schwenkbare Verbindung des äußeren Mantelrohrs (1) mit der fahrzeugfesten Konsole (2) mittels zweier Nietverbindungen ausgeführt ist, wobei die beiden Nietverbindungen diametral an einem Umfang des Mantelrohres (1) bereitgestellt sind **und eine Drehachse (D-D) bilden, die mit der Kreuzgelenkachse der Lenkspindel (3) einen kinematischen Versatz in der Lenkspindel verhindernd übereinstimmt, und** indem
für jede der durch zwei Nieten (4) gebildeten Verbindungen die fahrzeugfeste Konsole (2) eine Durchtrittsöffnung (5) aufweist, die in eine Durchtrittsöffnung (6) des äußeren Mantelrohrs (1) mündet, wobei ein Niet-Schließkopf (4') jeweils mantelrohrseitig zur Anlage kommt.

2. Höhenverstellbare Sicherheits-Lenksäulenanordnung nach Anspruch 1,
**dadurch gekennzeichnet, dass**
die Durchtrittsöffnung (5) der fahrzeugfesten Konsole (2) zumindest an ihrer von dem Mantelrohr (1) abgewandten Seite eine Fase (5') oder eine Ansenkung (5") zur Aufnahme eines Nietsetzkopfes (4") und
die Durchtrittsöffnung (6) des äußeren Mantelrohrs (1) an ihrer von der fahrzeugfesten Konsole (2) abgewandten Seite eine Fase (6') oder eine Ansenkung (6") zur zumindest teilweisen Aufnahme des Niet-Schließkopfes (4') aufweist.

3. Höhenverstellbare Sicherheits-Lenksäulenanordnung nach Anspruch 1 oder 2,
**dadurch gekennzeichnet, dass**
die Nieten (4) Halbhohlnieten, Senknieten, Krempelnieten, Pressnieten, Taumelnieten oder andere geeignete, einfache Nieten (4) sind.

4. Höhenverstellbare Sicherheits-Lenksäulenanordnung nach zumindest einem der Ansprüche 1 bis 3,
**dadurch gekennzeichnet, dass**
- zumindest in der Durchtrittsöffnung (6) des äußeren Mantelrohrs (1) oder
- in der Durchtrittsöffnung (6) des äußeren Mantelrohrs (1) und zumindest einem an die Durchtrittsöffnung (6) des äußeren Mantelrohrs (1) angrenzenden Abschnitt der Durchtrittsöffnung (5) der fahrzeugfesten Konsole (2)
eine Buchse (7), insbesondere eine Kunststoffbuchse (7) angeordnet ist und einen Nietschaft des Niets (4) umgibt.

5. Höhenverstellbare Sicherheits-Lenksäulenanordnung nach Anspruch 4,
**dadurch gekennzeichnet, dass**
die Buchse (7) schließkopfseitig mit einen flanschförmigen Rand (7') ausgebildet ist, wobei der flanschförmige Rand zumindest teilweise in der Ansenkung (6") aufgenommen ist.

6. Höhenverstellbare Sicherheits-Lenksäulenanordnung nach Anspruch 4
**dadurch gekennzeichnet, dass**
die Durchtrittsöffnung (5) der fahrzeugfesten Konsole (2) an ihrer zu dem äußeren Mantelrohr (1) weisenden Seite eine Fase (8) oder eine Ansenkung (8) aufweist, und dass ein sich in die Durchtrittsöffnung (5) der fahrzeugfesten Konsole (2) erstreckender Abschnitt der Buchse (7) eine Form aufweist, die komplementär zur Fase (8) oder der Ansenkung (8) ist.

7. Höhenverstellbare Sicherheits-Lenksäulenanordnung nach Anspruch 6
**dadurch gekennzeichnet, dass**
die Buchse (7) einen konischen Außenumfang aufweist und die aneinander grenzenden Durchtrittsöffnungen (5,6) einen komplementären Konus zur Aufnahme der Buchse (7) bereitstellen.

8. Höhenverstellbare Sicherheits-Lenksäulenanordnung nach zumindest einem der Ansprüche 1 bis 7
**dadurch gekennzeichnet, dass**
der Niet (4), insbesondere ein Niet (4) mit einem zylindrischen Nietschaft, an seinem Umfang eine Abstufung (9) aufweist, wobei ein Abschnitt des Nietschafts mit einem größeren Durchmesser mit einem Durchmesser der Durchtrittsöffnung (6) des Mantelrohrs (1)
und ein Abschnitt mit einem kleineren Durchmesser mit einem Durchmesser der Durchtrittsöffnung (5) der Konsole (2) übereinstimmt.

9. Höhenverstellbare Sicherheits-Lenksäulenanordnung nach zumindest einem der Ansprüche 1 bis 8,
**dadurch gekennzeichnet, dass**
das Mantelrohr (1) und die fahrzeugfeste Konsole (2) Gussbauteile, insbesondere Druckgussbauteile sind.

## Claims

1. Height adjustable safety steering column assembly having a vehicle-fixed bracket (2), in which an outer jacket tube (1) is pivotably mounted which comprises a steering shaft (3) with a universal joint and furthermore an inner jacket tube which surrounds a telescoping steering-wheel-end section of the steering shaft (3),
**characterised in that**
the pivotable connection of the outer jacket tube (1) to the vehicle-fixed bracket (2) is implemented by means of two riveted joints, wherein the two riveted joints are provided diametrically on a circumference of the jacket tube (1) and form a rotation axis (D-D) which coincides with the universal joint axis of the steering shaft (3) preventing a kinematic displacement in the steering shaft, and **in that**
the vehicle-fixed bracket (2) has a passage (5) for each of the connections formed by two rivets (4), said passage (5) opening into a passage (6) of the outer jacket tube (1), wherein a rivet closing head (4') respectively rests on the jacket tube side.

2. Height adjustable safety steering column assembly according to claim 1,
**characterised in that**
the passage (5) of the vehicle-fixed bracket (2) has at least on its side facing away from the jacket tube (1) a chamfer (5') or a countersink (5") to receive a rivet setting head (4") and
the passage (6) of the outer jacket tube (1) has on its side facing away from the vehicle-fixed bracket (2) a chamfer (6') or a countersink (6") to at least partially receive the rivet closing head (4').

3. Height adjustable safety steering column assembly according to claim 1 or 2,
**characterised in that**
the rivets (4) are semi-tubular rivets, countersink rivets, carding rivets, press rivets, orbital rivets or other suitable simple rivets (4).

4. Height adjustable safety steering column assembly according to at least one of the claims 1 to 3,
**characterised in that**
a bushing (7), in particular a plastic bushing (7), is arranged
- at least in the passage (6) of the outer jacket tube (1) or
- in the passage (6) of the outer jacket tube (1) and at least a section of the passage (5) of the vehicle-fixed bracket (2) adjacent to the passage (6) of the outer jacket tube (1),
and surrounds a rivet shank of the rivet (4).

5. Height adjustable safety steering column assembly according to claim 4,
**characterised in that**
the bushing (7) is formed on the closing head side with a flange-like edge (7'), wherein the flange-like edge is received at least partially in the countersink (6").

6. Height adjustable safety steering column assembly according to claim 4,
**characterised in that**
the passage (5) of the vehicle-fixed bracket (2) has on its side facing towards the outer jacket tube (1) a chamfer (8) or a countersink (8),
and a section of the bushing (7) extending into the passage (5) of the vehicle-fixed bracket (2) has a shape which is complementary to the chamfer (8) or the countersink (8).

7. Height adjustable safety steering column assembly according to claim 6,
**characterised in that**
the bushing (7) has a conical outer periphery and the passages (5, 6) adjacent to each other provide a complementary cone to receive the bushing (7).

8. Height adjustable safety steering column assembly according to at least one of the claims 1 to 7,
**characterised in that**
the rivet (4), in particular a rivet (4) with a cylindrical rivet shank, has a graduation (9) on its circumference, wherein a section of the rivet shank with a larger diameter corresponds to a diameter of the passage (6) of the jacket tube (1)
and a section with a smaller diameter corresponds to a diameter of the passage (5) of the bracket (2).

9. Height adjustable safety steering column assembly according to at least one of the claims 1 to 8,
**characterised in that**
the jacket tube (1) and the vehicle-fixed bracket (2) are cast components, in particular die cast components.

## Revendications

1. Agencement de colonne de direction de sécurité réglable en hauteur qui présente une console (2) solidaire du véhicule dans laquelle est monté en pivotement un tube enveloppe extérieur (1) qui renferme un arbre de direction (3) muni d'un joint à croisillon et, en outre, un tube enveloppe intérieur qui entoure un segment télescopique, côté volant de direction de l'arbre de direction (3), **caractérisé en ce que** la liaison pivotante du tube enveloppe extérieur (1) à la console (2) solidaire du véhicule est réalisée au moyen de deux liaisons rivetées, les deux liaisons rivetées étant formées diamétralement sur une périphérie du tube enveloppe (1) et formant un axe de rotation (D-D) qui concorde avec l'axe de l'articulation à croisillon de l'arbre de direction (3) empêchant un décalage cinétique dans l'arbre de direction, et du fait que, pour chacune des liaisons formées par deux rivets (4), la console (2) solidaire du véhicule présente une ouverture débouchante (5) qui débouche dans une ouverture débouchante (6) du tube enveloppe extérieur (1), une tête de fermeture de rivet (4') venant s'appuyer sur le côté du tube enveloppe.

2. Agencement de colonne de direction de sécurité réglable en hauteur selon la revendication 1, **caractérisé en ce que** l'ouverture débouchante (5) de la console (2) solidaire du véhicule présente au moins sur son côté orienté vers le tube enveloppe (1) un chanfrein (5') ou une fraisure (5") destinés à loger une tête de rivet (4") et l'ouverture débouchante (6) du tube enveloppe extérieur (1) présente sur son côté orienté vers la console (2) solidaire du véhicule un chanfrein (6') ou une fraisure (6") destinés à au moins loger en partie la tête de fermeture de rivet (4').

3. Agencement de colonne de direction de sécurité réglable en hauteur selon la revendication 1 ou 2, **caractérisé en ce que** les rivets (4) sont des rivets semi-cylindriques, des rivets à tête fraisée, des rivets par fluage radial, des rivets oscillant, des rivets de serrage ou d'autres rivets simples adaptés (4).

4. Agencement de colonne de direction de sécurité réglable en hauteur selon au moins l'une quelconque des revendications 1 à 3, **caractérisé en ce que**
- au moins dans l'ouverture débouchante (6) du tube enveloppe extérieur (1) ou
- dans l'ouverture débouchante (6) du tube enveloppe extérieur (1) et dans au moins une section de l'ouverture débouchante (5) avoisinante l'ouverture débouchante (6) du tube enveloppe extérieur (1) de la console (2) solidaire du véhicule, est disposée une douille (7), en particulier une douille en matière plastique (7) et entoure une tige (4) de rivet.

5. Agencement de colonne de direction de sécurité réglable en hauteur selon la revendication 4, **caractérisé en ce que** la douille (7) est dotée d'un bord (7') en forme de bride du côté de la tête de fermeture, le bord en forme de bride étant logé au moins en partie dans la fraisure (6").

6. Agencement de colonne de direction de sécurité réglable en hauteur selon la revendication 4, **caractérisé en ce que** l'ouverture débouchante (5) de la console (2) solidaire du véhicule présente sur le côté orienté vers le tube enveloppe extérieur (1) un chanfrein (8) ou une fraisure (8) et **en ce qu'**une section de la douille (7) s'étendant dans l'ouverture débouchante (5) de la console (2) solidaire du véhicule présente une forme qui est complémentaire à celle du chanfrein (8) ou de la fraisure (8).

7. Agencement de colonne de direction de sécurité réglable en hauteur selon la revendication 6, **caractérisé en ce que** la douille (7) présente une circonférence extérieure conique et les autres ouvertures débouchantes (5, 6) adjacentes présentent un cône complémentaire destiné à loger la douille (7).

8. Agencement de colonne de direction de sécurité réglable en hauteur selon au moins l'une quelconque des revendications 1 à 7, **caractérisé en ce que** le rivet (4), en particulier un rivet (4) doté d'une tige de rivet cylindrique, présente sur sa circonférence un échelonnement (9), une section de la tige de rivet ayant un plus grand diamètre coïncidant avec un diamètre de l'ouverture débouchante (6) du tube enveloppe (1) et une section ayant un diamètre plus petit coïncidant avec un diamètre de l'ouverture débouchante (5) de la console (2).

9. Agencement de colonne de direction de sécurité réglable en hauteur selon au moins l'une quelconque des revendications 1 à 8, **caractérisé en ce que** le tube enveloppe (1) et la console (2) solidaire du véhicule sont des composants coulés, en particulier des composants coulés sous pression.
